# EUROPEAN PATENT APPLICATION

(11) **EP 4 306 256 A1**
(43) Date of publication of application: **17.01.2024**
(21) Application number: 22306055.9
(22) Date of filing: 13.07.2022
(51) Int. Cl.: B23K 20/12, B23K 101/04, B23K 101/10, B23K 103/12, H01B 11/22, C22C 9/06

(54) **HIGH STRENGTH TUBE JOINING BY ROTARY FRICTION WELDING**

(71) Applicant: Nexans, 92400 Courbevoie (FR)
(72) Inventor: JOHANSON, Audun, 0653 Oslo (NO); JORGENSEN, Simon, 1655 Sellebakk (NO); SANGAR, Robin Kumar, 1445 DROBAK (NO); LARSSON, Jonas, 1605 Fredrikstad (NO)
(74) Representative: Ipsilon

(57) **Abstract**

A method of joining two tubes (10,20), comprising the steps of:
- aligning end walls of the two tubes (10,20) to be welded, each end wall (15,25) defined by an inner edge (11,21) and an outer edge (12,22);
- introducing an intermediate tube segment (30) between the end walls (15,25) of the two tubes (10,20), wherein the tube segment (30) has opposed end walls (35,36) defined by an inner edge (31) and an outer edge (32);
- bringing the end walls (15,25) of the two tubes (10,20) together against the opposing end walls (35,36) of said tube segment (30) to put the end walls (15,25) of the two tubes (10,20) and the opposing end walls (35,36) of the tube segment (30) under axial compressive stress at a friction ramp-up pressure and rotating the intermediate tube segment (30) about a tube segment longitudinal axis in at least one direction;
- increasing the axial compressive friction stress to a forging pressure in order to heat the end walls (15,25) of the two tubes (10,20) and the opposing end walls (35,36) of the tube segment (30); and
- increasing the axial compressive friction stress to a forging pressure, thus joining the two tubes (10,20) and the tube segment (30);
wherein each of the two tubes (10,20) and the tube segment (30) has a tube wall (4) made of a material resistant to hydrogen embrittlement.

## Description

### Field of the invention

The present invention relates to a welding method for high strength tubes for transporting hydrogen, the tubes having a tube wall made of a material resistant to hydrogen embrittlement, and an umbilical cable comprising such tubes for transporting hydrogen gas.

### Background

Recently umbilical cables are being developed for new purposes such as for transporting hydrogen. With these new purposes and applications come new requirements for the tubes transporting the fluids.

Specifically, the tubes must not react with the fluid, and be able to tolerate pressure. And, in the case of subsea cables, the tubes must also be corrosion resistant.

Current umbilical cables use ferritic steel for the transport of fluid. This material is not well adapted for the transport of hydrogen, as it will react with it. Aluminium and copper alloys have recently been considered as replacement materials for ferritic steel, see e.g. EP3913268A1.

However, with few exceptions, these materials are generally not possible to fusion weld without causing a local undermatch over the weld. This is particularly the case for high-strength precipitation and spinodal microstructures which dissolve under heat a heating weld.

This means that the weld and/or the associated heat affected zone (HAZ) is reduced in strength compared to the base material. This causes a local mechanical weak point in the tube which again reduces the tube pressure resistance for a given tube thickness.

The present invention attempts to solve these challenges, or at least to improve on existing solutions. This invention seeks to increase the joint strength by introducing a welding technique which reduces or voids the HAZ thus improving weld strength.

### SUMMARY OF THE INVENTION

The present invention is defined by the appended claims and in the following: In a first aspect, the invention relates to a method of joining two tubes with friction welding for use in an umbilical, comprising the steps of:
- aligning end walls of the two tubes to be welded, each end wall defined by an inner edge and an outer edge;
- introducing an intermediate tube segment between the end walls of the two tubes, wherein the tube segment has opposed end walls defined by an inner edge and an outer edge;
- bringing the end walls of the two tubes together against the opposing end walls of said tube segment to put the end walls of the two tubes and the opposing end walls of the tube segment under axial compressive stress at a friction ramp-up pressure and rotating the intermediate tube segment about a tube segment longitudinal axis in at least one direction;
- increasing the axial compressive friction stress to a forging pressure in order to heat the end walls of the two tubes and the opposing end walls of the tube segment; and
- increasing the axial compressive friction stress to a forging pressure, thus joining the two tubes and the tube segment;
wherein each of the two tubes and the tube segment has a tube wall made of a material resistant to hydrogen embrittlement.

The method results in a continuous tube made up of the two tubes and the intermediate tube segments welded together.

Here the term "friction ramp-up pressure" is used to refer to the initial pressure on the elements to be joined by rotation welding when the rotation is initiated. The pressure being sufficient to secure friction.

Here the skilled person will understand that axial compressive stress, relates to a compressive stress along the longitudinal axis of the aligned tubes and tube segment.

In an embodiment the rotation of the intermediate tube segment may be achieved by rotating said tube segment continuously in a single direction.

In an embodiment the rotation of the intermediate tube segment may be achieved by oscillating said tube segment in opposite directions.

In an embodiment, the rotation speed frequency of the intermediate tube segment is comprised between 300 and 1,000 rpm, preferably between 300 and 600 rpm.

In an embodiment, the friction ramp-up pressure is comprised between 35 and 120 MPa, preferably between 78 and 95 MPa.

In an embodiment, the friction pressure is comprised between 112 and 156 MPa, preferably between 130 and 147 MPa.

In an embodiment, the forging pressure is comprised between 121 and 208 MPa, preferably between 156 and 190 MPa.

In an embodiment, the intermediate tube segment is mounted in a frame

In an embodiment the frame is provided with a split to facilitate removal of said frame after said joining.

In an embodiment, the intermediate tube segment is rotated using at least one motor in at least one direction.

In a second aspect, the invention relates to a tube made by the method according to the first aspect of the invention.

In one embodiment, the tube according to the second aspect has a resulting HAZ length that is no larger than 20 mm, no larger than 15 mm, or preferably no larger than 12 mm on each side of the weld.

In one embodiment, the ratio between the length of the HAZ and tube thickness is less than 10, less than 5, or less than 3.

In one embodiment, the weld has a tensile strength that is equal to or over 40 %, 50 %, 60 %, 70 %, 80 % or 90 % of the tensile strength of the tubes before welding.

In one embodiment, the tube wall may be made of any material being found resistant to hydrogen embrittlement according to ISO 11114-4:2017.

In one embodiment, the tube wall may be monolithic consisting of a single material.

In one embodiment, the tube wall may be at least a dual-layered wall wherein the inner layer is made of the material resistant to hydrogen embrittlement. The one or more additional layers may advantageously be a reinforcing material such as stainless steel.

In a further embodiment, the tube may further comprise a sheathing/over-layer in the form of a coaxial tube overlaying the tube, a pressure armouring or transversal armouring made of stainless steel laid onto the tube wall.

Examples of hydrogen embrittlement resistant materials suited for use as the tube wall includes or a 25Cr-6Mo-5Ni duplex stainless steel, an austenitic stainless steel, an aluminium alloy, e.g. wrought alloy which can be formed into a tube and welded such as AA lxxx through AA 7xxx series according to the Aluminium Association Standard, a polymer-liner, e.g. a thermoplastic such as high-density polyethylene (HDPE), or a copper alloy.

In one embodiment, the austenitic stainless steel may preferably be a steel classified as the 200 or 300 series according to the American Iron and Steel Institute (AISI), preferably a 316 steel. The 300 series stainless steels achieve their austenitic structure primarily by its nickel content while 200 series stainless steels substitute some of its nickel content with manganese and nitrogen.

In one embodiment, the Cu-Ni-Sn alloy may contain from 14.5 to 15.5 wt% Ni, from 7.5 to 8.5 wt% Sn, and the rest being Cu and unavoidable impurities.

In one embodiment, the Cu-Ni-Sn alloy may contain from 8.5 to 9.5 wt% Ni, from 0.05 to 0.3 wt% Mn, from 5.5 to 6.5 wt% Sn, and the rest being Cu and unavoidable impurities.

In one embodiment, the copper alloy may preferably be a copper alloy containing:
- from 1.0 to 30.0 wt% Ni,
- from 0.0 to 5.0 wt% Si,
- from 0.0 to 10.0 wt% Mn,
- from 0.0 to 5.0 wt% Al,
- from 0.0 to 1.5 wt% Fe,
- from 0.0 to 1.0 wt% Mg,
- from 0.0 to 1.0 wt% Zn,
- from 0.0 to 1.0 wt% Co,
- from 4.0 to 10.0 wt% Sn,
- from 0.0 to 2.0 wt% Cr,
- from 0.0 to 1.5 wt% Zr,
- from 0.0 to 2.0 wt% Nb,
and the rest being Cu and unavoidable impurities.

In one embodiment, the copper alloy may preferably be a copper alloy containing:
- from 10.0 to 20.0 wt% Ni,
- from 6.0 to 10.0 wt% Sn,
- from 0.0 to 1.0 wt% Zn,
- from 0.0 to 1.0 wt% Fe,
- from .0 to 5.0 wt% Si,
- from 0.0 to 10.0 wt% Mn,
- from 0.0 to 5.0 wt% Al,
- from 0.0 to 1.0 wt% Mg,
- from 0.0 to 1.0 wt% Co,
- from 0.0 to 2.0 wt% Cr,
- from 0.0 to 1.5 wt% Zr,
- from 0.0 to 2.0 wt% Nb,
and the rest being Cu and unavoidable impurities.

In one embodiment, the copper alloy may preferably be a Cu-Ni-Si alloy containing:
- from 1.0 to 10.0 wt% Ni,
- from 0.25 to 3.0 wt% Si,
- from 0.0 to 0.5 wt% Mn,
- from 0.0 to 0.5 wt% Mg,
- from 0.0 to 2.0 wt% Cr,
- from 0.0 to 2.0 wt% Co,
and the rest being Cu and unavoidable impurities.

In one embodiment, the copper alloy may preferably be a Cu-Ni-Al-Fe alloy containing:
- from 5 to 20.0 wt% Ni,
- from 1.00 to 7.0 wt% Al,
- from 0.5 to 3.0 wt% Fe,
- from 0.1 to 1.0 wt% Mn,
and the rest being Cu and unavoidable impurities.

In one embodiment, the copper alloy may preferably be a Cu-Ni-Al-Fe alloy containing:
- from 13.0 to 16.0 wt% Ni,
- from 2.00 to 4.0 wt% Al,
- from 0.5 to 2.5 wt% Fe,
- from 0.1 to 0.5 wt% Mn,
and the rest being Cu and unavoidable impurities.

In a further embodiment, the Cu-Ni-Si alloy may contain from 6.0 to 8.0 wt% Ni, from 1.5 to 2.5 wt% Si, from 0.7 to 1.2 wt% Cr, and the rest being Cu and unavoidable impurities.

In a further embodiment, the Cu-Ni-Si alloy may contain from 2.2 to 4.2 wt% Ni, from 0.25 to 1.2 wt% Si, from 0.05 to 0.30 wt% Mg, and the rest being Cu and unavoidable impurities.

In a further embodiment, the Cu-Ni-Si alloy may contain from 1.0 to 5.0 wt% Ni, from 0.50 to 2.0 wt% Si, 0.1 wt% Mg, from 0.8 to 2.0 wt% Co, and the rest being Cu and unavoidable impurities.

In a further embodiment, the Cu-Ni-Si alloy may contain from 2.0 to 3.5 wt% Ni, from 0.3 to 0.7 wt% Si, and the rest being Cu and unavoidable impurities.

In one embodiment, the copper alloy may preferably be a Cu-Ni-Sn alloy containing:
- from 5.0 to 20.0 wt% Ni,
- from 0.0 to 0.5 wt% Mn,
- from 4.0 to 10.0 wt% Sn,
and the rest being Cu and unavoidable impurities.

In one embodiment, the copper alloy may preferably be a Cu-Ni-Mn-Al alloy containing:
- from 10.0 to 30.0 wt% Ni,
- from 2.5 to 8.0 wt% Mn,
- from 0.5 to 4.0 wt% Al,
- from 0.0 to 1.5 wt% Fe,
- from 0.0 to 1.5 wt% Nb,
and the rest being Cu and unavoidable impurities.

In a further embodiment, the Cu-Ni-Mn-Al alloy may contain from 13.5 to 16.5 wt% Ni, from 3.5 to 5.5 wt% Mn, from 1.0 to 2.0 wt% Al, from 0.0 to 1.0 wt% Fe, and the rest being Cu and unavoidable impurities.

In a further embodiment, the Cu-Ni-Mn-Al alloy may contain from 10.0 to 30.0 wt% Ni, from 4.0 to 6.0 wt% Mn, from 1.0 to 2.50 wt% Al, and the rest being Cu and unavoidable impurities.

In one embodiment, the copper alloy may preferably be a Cu-Ni alloy containing:
- from 10.0 to 30.0 wt% Ni,
- from 0.0 to 0.5 wt% Mn,
- from 0.0 to 0.3 wt% Fe,
- from 0.0 to 0.5 wt% Zn,
and the rest being Cu and unavoidable impurities.

In a further embodiment, the Cu-Ni alloy may contain from 23.0 to 26.0 wt% Ni, from 0.2 to 0.5 wt% Mn, from 0.1 to 0.2 wt% Fe, from 0.2 to 0.5 wt% Zn, and the rest being Cu and unavoidable impurities.

All copper alloys specified above have excellent corrosion resistance making them suitable for making tubes intended for use in marine environments, such as a submarine umbilical. They have further a yield limit of at least 400 MPa and they have excellent resistance towards hydrogen embrittlement.

The amount of material, i.e. the thickness of the tube wall, determined as the shortest distance between the inner and outer surface of the tube wall, may depend on several factors including the inner diameter of the tube, the expected physical and chemical loads/strains induced by the environment of the umbilical cable, use of an outer armouring layer and other factors.

In the example embodiment where the tube wall is a single-layered monolithic object consisting of the hydrogen resistant material, the thickness of the tube wall may in practice preferably be in the range of from 1.0 to 25.0 mm, more preferably of from 0.2 to 8.0 mm, more preferably of from 0.5 to 6.0 mm, more preferably of from 1 to 5.0 mm, and most preferably of from 4.0 to 6.0 mm.

In the example embodiment where the wall also comprises an outer layer, the thickness of the tube wall may in practice preferably be in the range of from 0.2 to 15.0 mm, preferably of from 0.2 to 10.0 mm, more preferably of from 0.3 to 5.0 mm, more preferably of from 0.3 to 2.5 mm, and most preferably of from 0.4 to 1.5 mm.

In an embodiment, the tube has a diameter from 12 mm to 1000 mm, preferably of from 12 to 200 mm or preferably from 20 to 50 mm.

The characterising part of the umbilical cable according to the invention is that the umbilical comprises at least one tube having a tube wall made of a hydrogen embrittlement resistant material. An especially preferred material for use as the tube wall material is a CuNi-alloy as specified above, especially CuNiSn- and CuNiSi-alloys.

CuNiSi-alloys can have suitable corrosion and mechanical properties for use as umbilical tubes for hydrogen transport. Ni and Si alloying elements added to a copper matrix followed by suitable heat treatment to cause spinodal decompositions hardening by the formation of Ni₂Si precipitates in the Cu metal structure. This can create materials with strengths in excess of 500 MPa yield strength and completely unaffected by a hydrogen environment.

In an embodiment of the invention, the intermediate tube segment may preferably be of the same material as the tubes to be welded.

The term "umbilical cable" as used herein encompasses any known or conceivable umbilical cable comprising at least one tube intended for transportation of hydrogen gas made of one of the alloys according to the first aspect of the invention. The umbilical will transport hydrogen and potentially electricity between offshore structures including subsea structures, or to and onshore structure. An umbilical cable usually comprises a bundle of one or more of electric conductors, fibre optic cables, electric signal cables, tubes etc. encapsulated by an over-sheath comprising an armouring and an outer polymer sheathing.

The term "electric conductor" as used herein refers to a current carrying cable. The umbilical may apply any known current carrying cable, including but not limited to a single strand of an electrically conductive material, a plurality of strands of an electrically conductive material arranged in a bunt, etc. In the latter case of applying an electric conductor comprising a bunt of strands, the space in-between the strands of electrically conductive material may be occupied by a semiconducting filler compound. The electric conductor may further comprise a semiconducting conductor screen arranged radially around and encompassing the single strand or bunt of strands. Examples of materials being suited as the current carrying strand(s) of the electric conductor of power cables include, but are not limited to; Cu, Cu-alloy, Al, or an Al-alloy. In practice, the electrically conductive material being applied as conductor(s) in power cables may advantageously have an electric conductivity of at least 4.8.10⁶ S/m at 20 °C, preferably of at least 1.0.10⁷ S/m at 20 °C and most preferably of at least 3.6.10⁷ S/m at 20 C.

Each electric conductor of the umbilical should be individually electrically insulated. This is typically obtained by covering the surface of the conductor screen by a layer of an electric insulating material, i.e. to make the conductor being sheathed in the electrically insulating material. The invention may apply any known or conceivable material, including dielectric materials, known to the skilled person as being suited as insulation of the current carrying conductor(s) of power cables. In practice the electric conductivity of the material being applied as insulation may advantageously have an electric conductivity of less than 10⁻¹⁴ S/m at 20 C, preferably less than 10⁻¹⁶ S/m at 20 °C, preferably less than 10⁻¹⁸ S/m at 20 °C, and most preferably less than 10⁻²⁰ S/m at 20 °C. Examples of materials suited for being applied to form the electric insulation of the conductor(s) include, but are not limited to; ethylene propylene rubber (EPR), ethylene propylene diene monomer (EDPM), rubber, polyethylene (EP), polypropylene (PP), polyurethane (PUR), cross-linked polyethylene (XLPE), and mass-impregnated (MI) paper. The insulation effect of the insulating material depends on the thickness of the layer of insulating material. In general, the higher voltage of the electric current in the conductor, the more insulation is needed. The determination of amount of insulating material required to electrically insulate a conductor is within the ordinary skills of the person skilled in the art.

Furthermore, the electric conductors and their electric insulation should be protected towards intrusion of water/moisture. An ingress of moisture into the core can lead to a failure of the cable. Thus, the inner sheathing of submarine power cables should be excellent water barriers able to completely block any intrusion of water and/or moisture to the conductor(s) and its(their) electric insulation for the duration of its design life. Furthermore, the inner sheathing of subsea cables should endure any movements imposed on the cable by wave motions, under water currents etc. without fatigue, unintended separation between the layers, cracking or any other mechanical breakdown destroying the water barrier function of the inner sheathing during the desired lifetime of the power cable, which may be many years. The inner sheathing may advantageously also function as an emergency earthing conductor leading eventual short circuit currents and/or eventual capacitive charging currents in the power cable to ground. I.e. there are rather stringent mechanical requirements imposed on the inner sheathing of power cables such that the inner sheathing is usually a metallic tube of sufficient diameter to house at least the electrically insulated conductor(s).

In a third aspect, the present invention relates to an umbilical cable for transportation of electric power and hydrogen, characterised in that the umbilical cable comprises:
- an electric conductor, and
- a tube made according to the first aspect of the invention for transporting hydrogen having a tube wall made of a material resistant to hydrogen embrittlement.

In one embodiment the umbilical cable may comprise one or more of fibre optic cables, electric signal cables, tubes for transferring pneumatic fluids, tubes for transferring air or other gases, and where the umbilical cable further comprises an over-sheath comprising an armouring and an outer polymer sheathing.

### SHORT DESCRIPTION OF THE DRAWINGS

In the following description this invention will be further explained by way of exemplary embodiments shown in the drawings:
Figure la is a cut-view drawing of a cross-section of an example embodiment of a tube according to the invention for transporting hydrogen.
Figure lb is a cut-view drawing of a cross-section of another example embodiment of a tube according to the invention for transporting hydrogen.
Figure 2a is a side view illustrating the alignment of the tubes and of the intermediate tube segment.
Figure 2b is a side view illustrating the rotation of the intermediate tube segment under compressive stress
Figure 2c is a side view illustrating the increase of the compressive stress and the joining of the tubes.
Figure 3 is a cut-view drawing of a cross-section of an example embodiment of an umbilical cable containing a tube according to the invention for transporting hydrogen.
Figure 4a is a cut-view drawing of a first example embodiment of an intermediate tube segment
Figure 4b is a cut-view drawing of a second example embodiment of an intermediate tube segment
Figure 4c is a cut-view drawing of a third example embodiment of an intermediate tube segment

### DETAILED DESCRIPTION OF THE INVENTION

Recently umbilical cables are being developed for new purposes such as for transporting hydrogen.

Today's umbilical cables use ferritic steel tubes for the transport of fluid. This material is not well adapted for the transport of hydrogen, as it will react with it. As such aluminium and copper alloys have been recently considered as replacement materials.

However, with few exceptions, these materials are generally not possible to fusion weld without causing a local undermatch over the weld. This is particularly the case for high-strength precipitation and spinodal microstructures which dissolve under heat a heating weld.

Warm non-solid fusion welding such as TIG (Tungsten Inert Gas) or MIG (Metal Inert Gas) or other traditional methods depend on liquefying metal intimate to the base material will always create a local HAZ (heat affected zone) which weakens the intimate base material to annealed state. For the copper alloys in question, this imply reducing the strength of the tube from beyond 700 MPa towards 100 MPa. This reduction causes a local mechanical weak point in the tube which again reduced the tube pressure resistance. The added heat also creates an extended HAZ which might cover an substantial axial length up to and beyond 20 mm.

In the case of hydrogen transport pressures of 30 - 1,200 bar, especially of 80 - 700 bar are to be expected. Consequently, the traditional solution has been to use tubes having a relatively high thickness when the tube is to be used with high internal pressure.

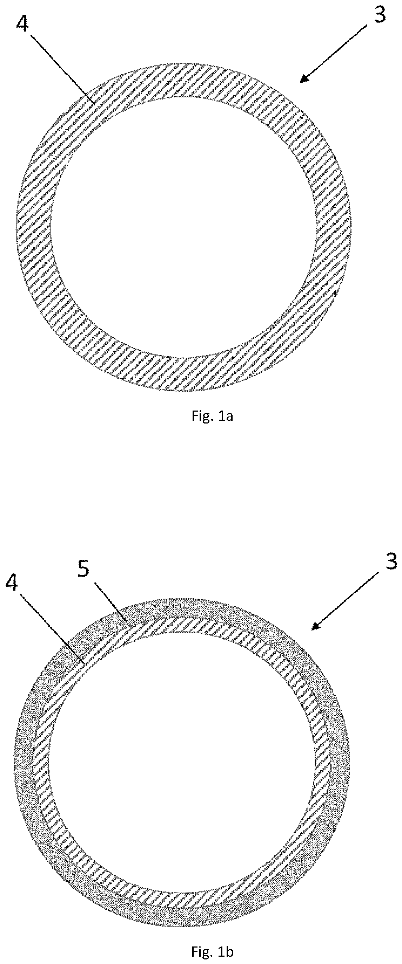

Figure 1a illustrate such a tube 3 having a wall 4 made of a material resistant to hydrogen embrittlement for transporting hydrogen made of material resistant to hydrogen. The wall is monolithic consisting of a single material. Figure 1b illustrate another tube 3 having a dual-layered wall 4,5 wherein the inner layer 4 is made of the material resistant to hydrogen embrittlement. The additional layer 5 is made of a reinforcing material, such as stainless steel.

The current invention describes using rotary friction welding technique to joint high strength tube segments. This technique drastically reduces the HAZ on selected materials compared to traditional fusion weld techniques, while also obtaining metallic bonding. In turn this creates a jointed tube having an increased strength, which when used in an umbilical, will increase resistance of the umbilical and increase its life span. This method is therefore an improvement with regards to cold pressure joints.

In contrast to traditional linear friction welding techniques where one of the two tubes to be welded are rotated while a pressure is applied, this invention suggests employing an intermediate tube segment which is rotated between two static tubes to be welded. This circumvents the issue of rotating full-length tubes which is not feasible when making tubes for umbilicals.

The friction welding technique tends to create a material upset consisting of deformed material displaced radially, both inwardly and outwardly.

The upset may be controlled by post-weld machining or confining elements. A confining element is an element that will limit the lateral development of the upset, inside or outside the tube weld.

An example of an inner confining element is a tube which outer diameter is close to the inner diameter of the tubes to join.

An example of an outer confining element is a tube which inner diameter is close to the outer diameter of the tubes to join.

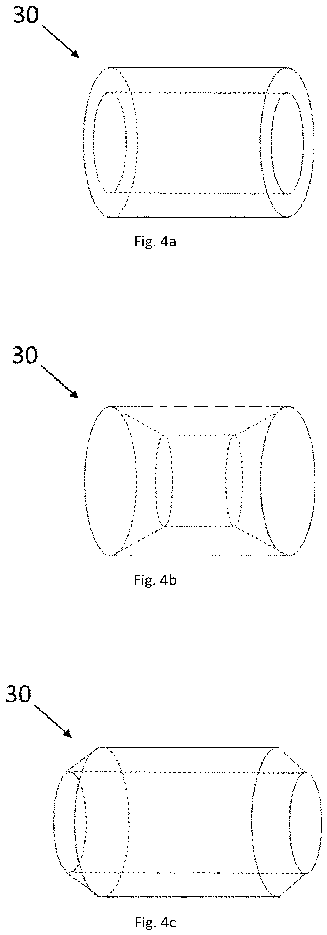

An alternative to reduce the upset is to use different geometries for the intermediate tube segment. Such geometries are illustrated in figure 4a, 4b and 4c.

In a first embodiment the intermediate tube segment is a tube with straight ends.

In a second example, the intermediate tube segment is a tube and each of the first and second ends of the segment may be in the form of an inverted cone with the tapered gap decreasing toward the outside surfaces.

In a third example, the intermediate tube segment is a tube and each of the first and second ends of the segment may be in the form of a cone with the tapered gap increasing toward the outside surfaces.

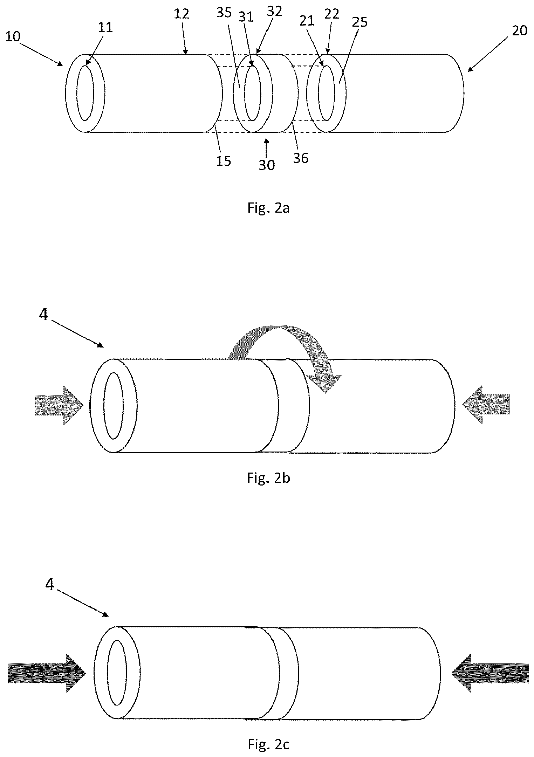

The method of joining tubes with friction welding for use in an umbilical is illustrated in Figures 2a, 2b and 2c. The method comprises:
- aligning end walls of the two tubes 10,20 to be welded, each end wall 15,25 defined by an inner edge 11,21 and an outer edge 12,22;
- introducing an intermediate tube segment 30 between the end walls 15,25 of the two tubes 10,20, wherein the tube segment 30 has opposed end walls 35,36 defined by an inner edge 31 and an outer edge 32; as shown in figure 2a.
- bringing the end walls 15,25 of the two tubes 10,20 together against the opposing end walls 35,36 of said tube segment 30 to put the end walls 15,25 of the two tubes 10,20 and the opposing end walls 35,36 of the tube segment 30 under axial compressive stress at a friction ramp-up pressure and rotating the intermediate tube segment 30 about a tube segment longitudinal axis in at least one direction;

- increasing the axial compressive friction stress to a forging pressure in order to heat the end walls 15,25 of the two tubes 10,20 and the opposing end walls 35,36 of the tube segment 30, as shown in figure 2b the arrows representing the axial compressive friction and the rotation of the rotation of the tube segment 30; and
- increasing the axial compressive friction stress to a forging pressure, thus joining the two tubes 10,20 and the tube segment 30, as shown in figure 2c, the arrows representing the axial compressive friction;
wherein each of the two tubes 10,20 and the tube segment 30 has a tube wall 4 made of a material resistant to hydrogen embrittlement.

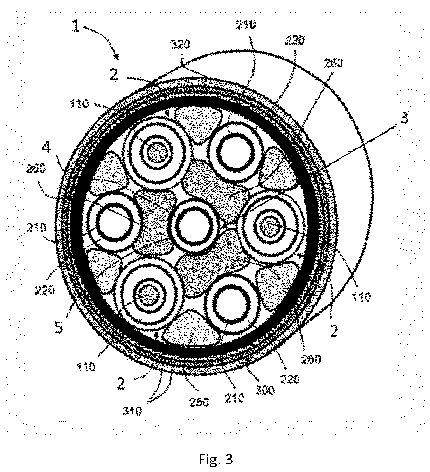

An umbilical cable 1 comprising a tube 3 made of material resistant to hydrogen embrittlement made by the method described above is illustrated in figure 3. The umbilical 1 comprises a tube 3 for transporting hydrogen and three electric power conductors 2 with a conductive core 110. The tube 3 has a dual-layered wall 4,5 wherein the inner layer 4 is made of the material resistant to hydrogen embrittlement. The additional layer 5 is made of a reinforcing material, such as stainless steel.

In the example embodiment illustrated in figure 3, the power umbilical cable 1 further comprises three peripheral tubes 210, 220 distributed and held in place by profile elements 250, 260. These elements fill the inner space inside an over-sheath comprising an armouring 310 of steel wires and an outer polyethylene sheathing 320.

In an example embodiment, the intermediate segment was rotated at 500 rpm, the ramp up friction was set up as 87 MPa, the friction pressure was set at 138 MPa and the forge pressure was set at 173 MPa

The weld obtained in the example embodiment reached excellent weld strength of above 500 MPa UTS and good elongation, starting for a material having a strength of about 700 MPa UTS. In other words the weld had a strength of above 70% of the original material.

Further analysis of the weld show that the HAZ was limited to 2-5 mm on each side of the weld

## Claims

1. A method of joining two tubes (10,20), comprising the steps of:
- aligning end walls of the two tubes (10,20) to be welded, each end wall (15,25) defined by an inner edge (11,21) and an outer edge (12,22);
- introducing an intermediate tube segment (30) between the end walls (15,25) of the two tubes (10,20), wherein the tube segment (30) has opposed end walls (35,36) defined by an inner edge (31) and an outer edge (32);
- bringing the end walls (15,25) of the two tubes (10,20) together against the opposing end walls (35,36) of said tube segment (30) to put the end walls (15,25) of the two tubes (10,20) and the opposing end walls (35,36) of the tube segment (30) under axial compressive stress at a friction ramp-up pressure and rotating the intermediate tube segment (30) about a tube segment longitudinal axis in at least one direction;
- increasing the axial compressive friction stress to a forging pressure in order to heat the end walls (15,25) of the two tubes (10,20) and the opposing end walls (35,36) of the tube segment (30); and
- increasing the axial compressive friction stress to a forging pressure, thus joining the two tubes (10,20) and the tube segment (30);
wherein each of the two tubes (10,20) and the tube segment (30) has a tube wall (4) made of a material resistant to hydrogen embrittlement.

2. The method of claim 1, wherein the tube segment (30) is rotated about the tube segment longitudinal axis in at least one direction by oscillating said tube segment (30) in opposite directions.

3. The method of claim 1 or 2, comprising the step of:
adding or removing heat to said tube segment (30), to control the welding temperature.

4. A tube made by the method according to any one of claims 1 to 3.

5. A tube according to claim 4, wherein the tube wall (4) is made of a material found resistant to hydrogen embrittlement according to ISO 11114-4:2017.

6. A tube according to any one of claims 4 to 5, wherein the tube wall (4) is made of a copper alloy.

7. A tube according to any one of claims 4 to 6, wherein the tube wall (4) is made of a Cu-Ni-Si or a Cu-Ni-Sn alloy.

8. A tube according to any one of claims 4 to 7, wherein the thickness of the tube wall (4) is in the range of from 1.0 to 25.0 mm, more preferably of from 0.2 to 8.0 mm, more preferably of from 0.5 to 6.0 mm, more preferably of from 1 to 5.0 mm, and most preferably of from 4.0 to 6.0 mm.

9. A tube according to any one of claims 4 to 8, wherein the tube wall (4) is a dual-layered wall and where the inner layer of the tube wall (4) is made of a material resistant to hydrogen embrittlement.

10. An umbilical cable for transportation of electric power and hydrogen, **characterised in that** the umbilical cable (1) comprises:
- an electric conductor (2), and
- a tube (3) for transporting hydrogen made of material resistant to hydrogen embrittlement made by the method according to any one of claim 1 to 3.

11. An umbilical cable according to claim 10, wherein the umbilical cable further comprises one or more of fibre optic cables, electric signal cables, tubes for transferring pneumatic fluids, tubes for transferring air or other gases, and where the umbilical cable further comprises an over-sheath comprising an armouring and an outer polymer sheathing.

12. An umbilical cable according to claim 10 or 11, wherein the tube wall (4) is made of a material found resistant to hydrogen embrittlement according to ISO 11114-4:2017.

13. An umbilical cable according to any one of claims 10 to 12, wherein the tube wall (4) is made of a copper alloy.

14. An umbilical cable according to any one of claims 10 to 13, wherein the thickness of the tube wall (4) is in the range of from 1.0 to 25.0 mm, more preferably of from 0.2 to 8.0 mm, more preferably of from 0.5 to 6.0 mm, more preferably of from 1 to 5.0 mm, and most preferably of from 4.0 to 6.0 mm.

15. An umbilical cable tube according to any one of claims 10 to 14, wherein the tube wall (4) is a dual-layered wall and where the inner layer of the tube wall is made of a material resistant to hydrogen embrittlement.
